Europäisches Patentamt

European Patent Office

Office européen des brevets

(11) Publication number: **0 232 008**
A1

# EUROPEAN PATENT APPLICATION

(21) Application number: 87300141.6

(22) Date of filing: 08.01.87

(51) Int. Cl.³: **F 16 D 1/08**
F 16 C 33/72

(30) Priority: 08.01.86 ZA 860143

(43) Date of publication of application:
12.08.87 Bulletin 87/33

(84) Designated Contracting States:
DE ES FR GB IT NL SE

(71) Applicant: S.K.F. SOUTH AFRICA (PROPRIETARY) LIMITED
Jones Road
Boksburg Transvaal(ZA)

(72) Inventor: Lipke, Walter Karl
29 Hazel Road Benoni Agricultural Holdings
Benoni Transvaal(ZA)

(74) Representative: Blanco White, Henry Nicholas et al,
ABEL & IMRAY Northumberland House 303-306 High
Holborn
London WC1V 7LH(GB)

(54) Fixing parts to shafts.

(57) A bearing cover plate is formed in two parts 11 and 12 and is fixed to a shaft 10 by clamping an annulus 14 between the parts with interposed O-rings 15. The cover plate is very securely fixed to the shaft 10.

EP 0 232 008 A1

Croydon Printing Company Ltd.

-1-

" FIXING PARTS TO SHAFTS "

BACKGROUND TO THE INVENTION

This invention relates to the fixing of parts to shafts.

In many situations shafts have to carry parts which rotate with them and these parts have to be secured with a high degree of accuracy for the sake of proper functioning.  Thus flinger plates for bearing housings should be accurately positioned for the seals to be effective.

It has been proposed to secure such parts by splitting the part into sections along a radial plane and clamping the sections to an O-ring which is a tight fit around the shaft.  This procedure is sensitive to inequalities in the sections.

## SUMMARY OF THE INVENTION

According to the invention a method of securing a part to a round cylindrical member, such as a shaft, which part can slide onto the member, comprises the steps of forming the part in split sections which between them define an annular space around the shaft, positioning an annulus which is a slide fit around the member on the member and clamping the annulus between the sections in the space with an O-ring interposed between each section and the annulus and with each O-ring confined between the annulus and the relevant section.

An assembly for fixing a part to a round cylindrical member about which it is a slide fit, according to the invention comprises a part split into two sections which define a space between them when they surround the member, an annulus which is a slide fit on the member, a pair of O-rings, the O-rings and the annulus being adapted to fit into the space, and means to clamp the two parts together so as to compress an O-ring between each part and the annulus.

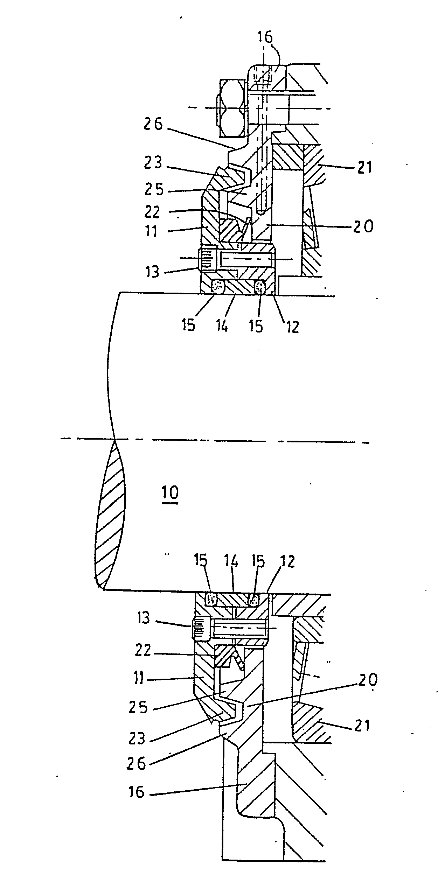

## DESCRIPTION OF THE DRAWING

It is a section of a bearing flinger plate secured to a shaft.

## DESCRIPTION OF AN EMBODIMENT

A shaft 10 carries a flinger plate for a bearing housing 16. The flinger plate is composed of a front section 11 and a rear section 12 which may be clamped together by means of set screws 13. Each of the sections has an annular groove adjacent the shaft 10 and the grooves together form an annular cavity around the shaft 10.

On the shaft 10 there is an annulus 14 which is a slide fit on it. On each side of the annulus there is an O-ring 15. The annulus 14 and the O-rings 15 fit into the annular cavity formed between the parts 11 and 12. In the clamped position as illustrated, the O-rings 15 are squeezed between the annulus and a section 11 or 12.

The result is that the flinger plate 11, 12 is accurately and securely positioned on the shaft 10 in a stable position without any wobbling. The ingress of dirt along the shaft 10 is also prevented.

Facing the flinger plate 11 is a side wall 20 of the bearing housing of a bearing 21.

Between the plate 11 and the wall 20 there is a conventional lip sealing ring 22 or any other suitable rubbing seal.

The plate 11 is formed with an annular flange 23 bounded by two conic surfaces. The flange 23 is straddled by two annular flanges 25 and 26 also bounded by conic surfaces. The conic surfaces are on frusto-cones co-axial with the shaft 10.

It will be seen that between the sealing ring 22 and the labyrinth outlet between the flanges 23 and 26 a labyrinth is formed which is composed of interconnected passages which all have a radial component. Particles which penetrate the seal thus tend to be moved to the outlet by centrifugal force. Also if liquid enters at the top, it runs through the labyrinth and out at the bottom.

CLAIMS:

1.

A method of securing a part to a round cylindrical member, which part can slide onto the member, comprising the steps of forming the parts in split sections which between them define an annular space around the shaft, positioning an annulus which is a slide fit around the member on the member and clamping the annulus between the sections in the space with an 0-ring interposed between each section and the annulus and with each 0-ring confined between the annulus and the relevant section.

2.

The method of claim 1 in which the member is a shaft.

3.

The method of either one of claims 1 or 2 in which the space is an annular cavity which is a slide fit on the annulus.

4.

The method of any one of the above claims in which the part is a flinger plate for a bearing.

5.

An assembly for fixing a part to a round cylindrical member about which it is a slide fit, comprising a part split into two sections which define a space between them when they surround the member, an annulus which is a slide fit on the member, a pair of 0-rings, the 0-rings and the annulus being adapted to fit into the space, and means to clamp the two parts together so as to compress an 0-ring between each part and the annulus.

6.

The assembly claimed in claim 5 in which the space is an annular cavity which is a slide fit on the annulus.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | DE-C- 869 892 (SPIETH) <br><br> * Page 3, figure 9 * <br><br> --- | 1-3,5, 6 | F 16 D 1/08 <br> F 16 C 33/72 |
| Y | US-A-2 848 884 (MAUDE) <br><br> * Whole document * <br><br> --- | 1-3,5, 6 | |
| A | FR-A- 940 797 (HERBLOT) <br> * Page 1; figures 3,4 * <br><br> --- | 1,2,5 | |
| A | CH-A- 444 590 (DREIDING) <br> * Whole document * <br><br> --- | 1,2,5 | |
| A | FR-A-2 062 526 <br> (KUPFER-ASBEST-CO.) <br> * Page 6; figure 5 * <br><br> --- | 1,2,5 | **TECHNICAL FIELDS SEARCHED (Int. Cl 4)** |
| A | FR-A-2 564 524 (BOSCH GmbH) <br><br> ----- | | F 16 D 1/00 <br> F 16 C |

The present search report has been drawn up for all claims

| Place of search | Date of completion of the search | Examiner |
|---|---|---|
| THE HAGUE | 03-04-1987 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82